# EUROPÄISCHE PATENTSCHRIFT

(11) **EP 0 433 493 B1**
(45) Veröffentlichungstag und Bekanntmachung des Hinweises auf die Patenterteilung: **14.09.1994**
(21) Anmeldenummer: 89123791.9
(22) Anmeldetag: 22.12.1989
(51) Int. Cl.: G21C 3/34

(54) **Kernreaktor-Brennelement mit Abstandhaltern und Verfahren zu deren Herstellung**
Nuclear reactor fuel assembly comprising spacergrids and method for their fabrication
Assemblage de combustible de réacteur nucléaire à grilles d'espacement et méthode pour sa fabrication

(43) Veröffentlichungstag der Anmeldung: 26.06.1991
(73) Patentinhaber: SIEMENS AKTIENGESELLSCHAFT, 80333 München (DE)
(72) Erfinder: Matthias, Rudolf, Dipl.-Ing. (FH), D-8521 Weisendorf (DE)

(56) Entgegenhaltungen:
- EP-A- 0 210 526
- DE-A- 2 329 471
- FR-A- 1 497 083

## Beschreibung

Die Erfindung bezieht sich auf ein Kernreaktor-Brennelement mit zueinander parallelen Stäben, insbesondere Kernbrennstoff enthaltenden Stäben, die durch Abstandhalter zusammengefaßt werden und in Druckwasser-, Siedewasser- und Brut-Reaktoren einsetzbar sind. Die Erfindung hat besondere Bedeutung für die Abstandshalterung von Brennstäben in fortgeschrittenen Druckwasserreaktoren, die im Vergleich zu herkömmlichen Druckwasserreaktoren einen sehr kleinen Brennstababstand haben. Die Erfindung bezieht sich auch auf ein Verfahren zur Herstellung eines Abstandhalters für das Kernreaktor-Brennelement.

Aus der EP-B-0 210 526 ist ein Reaktorbrennelement bekannt, bei dem aus Hülsen zusammengesetzte Abstandhalter vorgesehen sind, welche Gittermaschen für die Aufnahme jeweils eines Stabes haben. In jedem Gitter ist zwischen zwei achteckigen Haupthülsen eine quadratische Distanzhülse angeordnet. Dabei sind an den Haupthülsen Distanzhülsenhälften in der Weise angeformt, daß beim Zusammensetzen des gitterförmigen Abstandhalters jeweils freie Enden der Schenkel der Distanzhülsenhälften der einen Haupthülse mit freien Enden von Schenkeln der Distanzhülsenhälften einer benachbarten Haupthülse aneinanderstoßen. Die Stoßstellen sind verschweißt und bilden Längsnähte, die nur einen geringen Strömungswiderstand für das von Kühlmittel durchströmte Kernreaktorbrennelement haben.

Beim fortgeschrittenen Druckwasserreaktor bereitet die Abstandshalterung der Brennstäbe wegen des im Vergleich zum herkömmlichen Druckwasserreaktor sehr kleinen Brennstababstandes und der Stabanordnung, Schwierigkeiten.

Der Erfindung liegt die Aufgabe zugrunde ein Kernreaktor-Brennelement mit einem Abstandshalter und ein Verfahren zur Herstellung des Abstandhalters anzugeben, der auch bei kleinen Stababständen einen möglichst kleinen Strömungswiderstand hat und eine sichere Halterung der Stäbe, insbesondere der Brennstäbe, gewährleistet.

Gelöst wird diese Aufgabe durch ein Kernreaktor-Brennelement mit zueinander parallelen Stäben, insbesondere Kernbrennstoff enthaltenden Stäben, und mit einem Abstandshalter, der durch Aneinanderreihen von prismatischen Hülsen ein Gitter bildet, dessen Maschen zur Aufnahme jeweils eines Stabes dienen, wobei von den Hülsen Stege in der Weise abgebogen sind, daß beim Aneinanderreihen von Hülsen die jeweils freien Enden der Stege stumpf aneinander stoßen und Wandteile von zusätzlichen Hülsen bilden, wobei die Stoßstellen durch Schweißen verbunden sind.

Auf diese Weise wird eine enge Maschenanordnung ermöglicht, wobei den Strömungsquerschnitt verengende Doppelungen (Überlappungen) in den Maschen des Abstandshalters vermieden werden. Die Hülsen des Abstandshalters können aus einem einzigen Blechstück auf Automaten mit sehr hoher Fertigungsgenauigkeit hergestellt werden, wobei die Gitterteilung des Abstandhalters selbst durch entsprechende Montage- und Schweißvorrichtungen sehr genau eingehalten werden kann.

Für den Einsatz in fortgeschrittenen Druckwasserreaktoren ist es günstig, wenn die Hülsen die Gestalt eines sechseckigen Prismas haben, und die Stege an den Ecken der Hülsen abgebogen sind. Dadurch wird gegenüber einem Abstandhalter, bei dem achteckige Haupthülsen und quadratische Distanzhülsen verwendet sind, eine erhebliche Vereinfachung im Aufbau und eine Herabsetzung des Strömungswiderstandes erzielt, da Distanzhülsen nicht erforderlich sind.

Zweckmäßigerweise sind die Stege an ihren freien Enden abgeschrägt. Dadurch wird die Verwendung besonders dünner Bleche für die Hülsen ermöglicht, ohne daß eine Blechdoppelung (Überlappen) zum Bilden einer haltbaren Schweißnaht vorgenommen werden muß.

Um die Strömungswiderstände weiter zu verringern, ist es vorteilhaft, an mindestens einem Wandteil einer Hülse zwei parallele Einschnitte vorzusehen die dadurch gebildeten Lamellen auszubiegen, um eine Feder für die spielfreie Lagerung eines durch die Hülse geführten Stabes zu bilden.

Die Erfindung bezieht sich auch auf ein Verfahren zum Herstellen eines Abstandhalters für ein Kernreaktor-Brennelement mit zueinander parallelen Stäben, insbesondere Kernbrennstoff enthaltenden Stäben, bei dem aus Blech ein abgewickelter Mantel einer Hülse ausgestanzt wird, der mit Schlitzen für Stege und parallelen Einschnitten zum Bilden von Lamellen sowie mit Sicken versehen wird, der ausgestanzte Mantel zu einer prismatischen Hülse geformt und die Stoßstelle des geformten Hülsenmantels geschweißt oder gelötet wird, Stege und Lamellen ausgebogen werden und eine Anzahl von Hülsen derart zu einem Abstandhalter aneinandergereiht werden, daß jeweils freie Enden von Stegen stumpf aneinander stoßen und Wandteile von zusätzlichen Hülsen bilden, wobei die Stege durch Schweißen oder Löten verbunden werden, und ein Gitter gebildet wird dessen Maschen zur Aufnahme jeweils eines Stabes dienen. Dieses Verfahren ist mit Stanz- und Biegeautomaten in einfacher Weise und kostengünstig durchführbar.

Ein Ausführungsbeispiel der Erfindung ist in der Zeichnung dargestellt, darin zeigen:
- FIG 1: eine Ansicht eines Kernreaktor-Brennelements
- FIG 2: eine Draufsicht auf einen Teil eines Abstandhalters
- FIG 3: eine Hülse in Draufsicht
- FIG 4: eine Abwicklung des Hülsenmantels und
- FIG 5: eine Seitenansicht eine gemäß Figur 3.

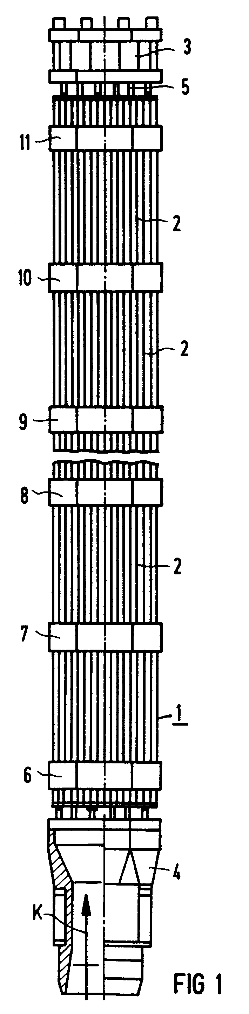

In Figur 1 ist ein Brennelement 1 dargestellt, das aus Brennstäben 2 in einer sechseckigen Gitteranordnung aufgebaut ist. In einem Reaktorkern wird eine vorgegebene Anzahl von untereinander gleichen Brennelementen vorgesehen, welche in einem Reaktordruckbehälter angeordnet und in Richtung des Pfeiles K von unten nach oben von einem Kühlmittel durchströmt werden. Brennstäbe 2 jedes Brennelementes werden in einer Tragstruktur gehalten, die aus einem Brennelementekopf 3 und einem Brennelementefuß 4 und dazwischen liegenden Führungsrohren 5 für nicht gezeigte Steuerstäbe bestehen. An den Führungsrohren 5 sind Abstandhalter 6 bis 11 befestigt, welche die Brennstäbe 2 zu einem Bündel zusammenfassen und derart haltern, daß sie sich frei ausdehnen können und gleiche Kühlquerschnitte vorliegen. Durch eine seitlich offene Konstruktion der Brennelemente wird eine Quervermischung des Kühlmittels ermöglicht und dessen Aufwärmung vergleichmäßigt.

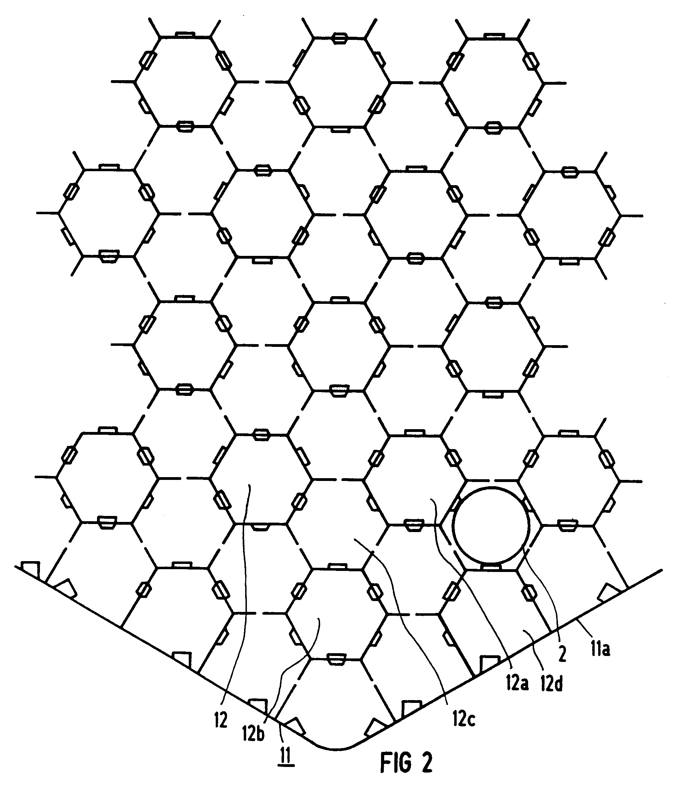

Figur 2 zeigt eine Draufsicht auf einen Teil eines sechseckigen Abstandhalters 11, der durch Aneinanderreihen von prismatischen Hülsen 12 ein Gitter bildet. Die Maschen dieses Gitters dienen zur Aufnahme jeweils eines Stabes 2.

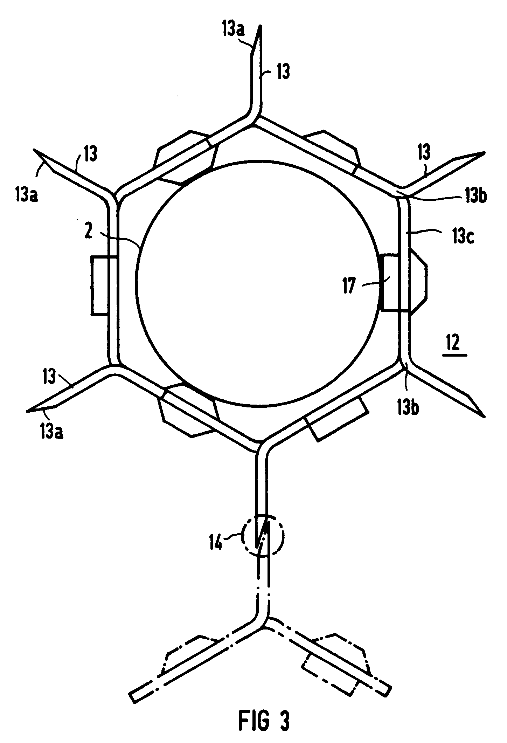

Wie in Figur 3 dargestellt ist, sind von jeder Hülse 12 Stege 13 abgebogen, welche Wandteile benachbarter Hülsen in der Weise bilden, daß beim Aneinanderreihen von Hülsen die jeweils freien Enden 13a der Stege 13 stumpf aneinander stoßen. Die Stoßstellen werden durch Schweißen verbunden (Schweißstelle 14).

Die Stege 13 sind an ihren freien Enden abgeschrägt, um ein Schweißen bei dünnen Stegen 13 zu erleichtern.

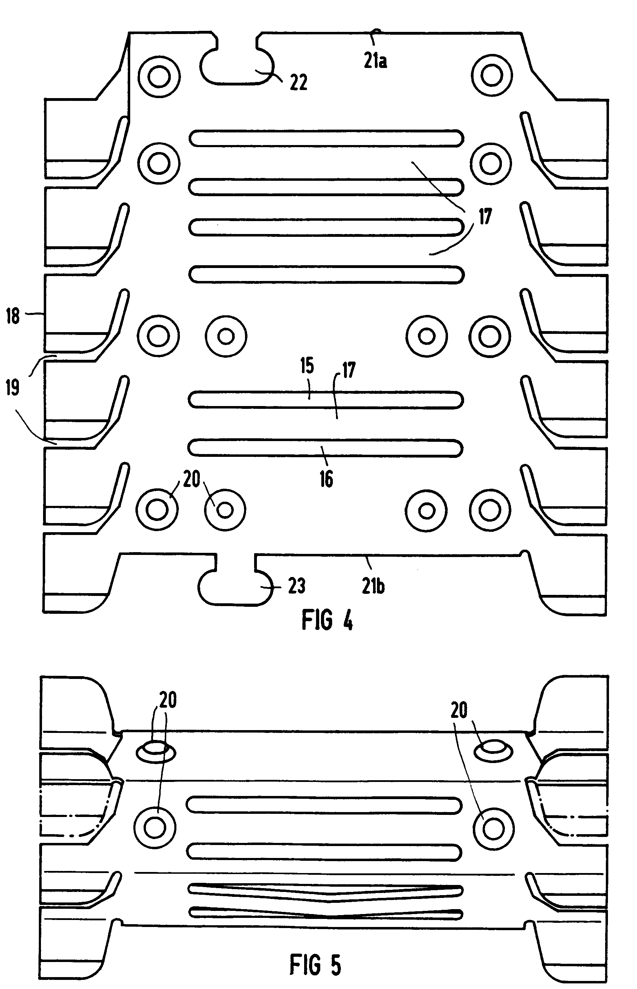

Bei der Herstellung einer Hülse wird die abgewickelte Mantel fläche der Hülse 12 aus Blech (Figur 4), z. B. aus einem Blechstreifen ausgestanzt. Dabei werden Schlitze 19 für die Stege und parallele Einschnitte 15 16 zum Bilden von Lamellen mitgestanzt. Die Lamellen werden ausgebogen, um eine Feder 17 für die elastische spielfreie Lagerung eines in der Hülse geführten Stabes zu bilden. Dadurch daß die Feder 17 aus dem Blechteil, der den Mantel bildet, herausgearbeitet ist, wird eine gewünschte weiche Federkennlinie erreicht, ohne daß ein zusätzliches Federelement eingesetzt werden muß. Nach dem Stanzen oder unmittelbar mit dem Stanzen können Sicken 20 eingedrückt werden. Diese Sicken dienen später als Lagerelemente für einen in der Hülse gehaltenen Brennstab.

Das ausgestanzte Teil 18 wird zu einer prismatischen Hülse geformt, wie dies die Figur 5 zeigt. Die Stoßseiten 21a, 21b des Hülsenmantels werden zusammengeschweißt oder -gelötet. Schon vor diesem Vorgang oder danach können die Stege 13 und Lamellen ausgebogen werden. Die Hülse wird später einem Härtungsvorgang unterzogen.

Für jeden in der Hülse zu lagernden Stab 2 wird in der Hülse 12 mindestens eine Dreipunktlagerung vorgesehen, die aus wenigstens zwei Sicken 20 und einer Feder 17 gebildet ist. Wie aus den Figuren 4 und 5 zu sehen ist, können Schlitze 19 im Blechteil 18 in symmetrischer Ausführung an beiden Hülsendenen vorgesehen sein.

Zweckmäßigerweise hat das Blechteil 18 an den Stoßseiten 21a, 21b einen Ausschnitt 22, in den beim Formen der Hülse ein zapfenartiges Blechteil 23 an der gegenüberliegenden Stoßseite unter Bildung eines Formschlusses eingreift.

Zum Herstellen eines Abstandhalters wird eine Anzahl von Hülsen zu einem Gitter zusammengefügt. Dabei werden aus den Stegen 13 angrenzender Hülsen 12 Wandteile für neue Hülsen gebildet. Beispielsweise wird, wie Figur 2 zeigt, durch Aneinanderfügen der Hülsen 12, 12a, 12b eine neue Hülse 12c durch die Stege der drei Hülsen 12, 12a, 12b gebildet. Analog wiederholt sich der Vorgang für die anderen Hülsen. Für die am Rand befindlichen Maschen des Abstandhalters werden seitlich offene Hülsen 12d mit längeren Wandteilen verwendet, die mit einem Umfassungsrahmen 11a verschweißt werden.

## Patentansprüche

1. Kernreaktor Brennelement mit zueinander parallelen Stäben, insbesondere Kernbrennstoff enthaltenden Stäben, und mit mindestens einem Abstandhalter, der durch Aneinanderreihen von prismatischen Hülsen (12, 12a, 12b) ein Gitter bildet, dessen Maschen zur Aufnahme jeweils eines Stabes (2) dienen, wobei von den Hülsen (12, 12a, 12b) Stege (13) in der Weise abgebogen sind, daß beim Aneinanderreihen von Hülsen die jeweils freien Enden (13a) der Stege (13) stumpf aneinander stoßen und Wandteile von zusätzlichen Hülsen 12c bilden, wobei die Stoßstellen (14) durch Schweißen oder Löten verbunden sind.

2. Kernreaktor-Brennelement nach Anspruch 1, bei dem die Hülsen (12, 12a, 12b) die Gestalt eines sechseckigen Prismas haben und die Stege (13) an den Ecken (13b) der Hülsen (13) abgebogen sind.

3. Kernreaktor-Brennelement nach Anspruch 2, bei dem die Stege (13) an ihren freien Enden (13a) angeschrägt sind.

4. Kernreaktor-Brennelement nach Anspruch 1, bei dem an mindestens einem Wandteil (13c) einer Hülse (12) zwei parallele Einschnitte (15, 16) vorgesehen sind und die dadurch gebildete Lamelle ausgebogen ist, um eine Feder (17) für die spielfreie Lagerung eines durch die Hülse geführten Stabes (2) zu bilden.

5. Kernreaktor-Brennelement nach Anspruch 1 oder 4, bei dem an mindestens zwei Wandteilen der Hülse wenigstens je eine Sicke (20) als Lagerstellen für den Stab (2) vorgesehen sind.

6. Verfahren zum Herstellen eines Abstandhalters (11) für ein Kernreaktor-Brennelement mit zueinander parallelen Stäben, insbesondere Kernbrennstoff enthaltenden Stäben, bei dem aus Blech ein abgewickelter Mantel einer Hülse (12) ausgestanzt wird, der mit Schlitzen (19) für Stege (13) und parallelen Einschnitten (15, 16) zum Bilden von Lamellen sowie mit Sicken (20) versehen wird, der ausgestanzte Mantel (18) zu einer prismatischen Hülse (12) geformt und die Stoßseiten (21a, 21b) des geformten Hülsenmantels geschweißt oder gelötet wird, Stege und Lamellen ausgebogen werden und eine Anzahl von Hülsen (12, 12a, 12b) derart zu dem Abstandhalter (11) aneinandergereiht werden, daß jeweils freie Enden (13a) von Stegen (13) stumpf aneinander stoßen und Wandteile von zusätzlichen Hülsen bilden, wobei die jeweils freien Enden (13a) der Stege durch Schweißen oder Löten verbunden werden, und ein Abstandhaltergitter gebildet wird dessen Maschen zur Aufnahme jeweils eines Stabes (2) dienen.

## Claims

1. A nuclear reactor fuel element comprising parallel rods, more particularly rods containing nuclear fuel, and with at least one spacer in which prismatic sleeves (12, 12a, 12b) are lined up to form a grid having meshes for each holding one rod (2), webs (13) being bent away from the sleeves (12, 12a, 12b) so that when the sleeves are lined up the respective free ends (13a) of the webs (13) abut one another and form wall parts of additional sleeves (12c), the joints (14) being connected by welding or soldering.

2. A nuclear reactor fuel element according to claim 1, in which the sleeves (12, 12a, 12b) have the shape of a hexagonal prism and the webs (13) are bent at the corners (13b) of the sleeves (13).

3. A nuclear reactor fuel element according to claim 2, in which the webs (13) are bevelled at their free ends (13a).

4. A nuclear reactor fuel element according to claim 1, in which at least one wall part (13c) of a sleeve (12) is formed with two parallel cuts (15, 16) and the resulting strip is bent outwards to form a spring (17) for clearance-free mounting of a rod (2) guided by the sleeve.

5. A nuclear reactor fuel element according to claim 1 or 4, in which at least two wall parts of the sleeve are each provided with at least one bead (20) as a bearing for the rod (2).

6. A method of producing a spacer (11) for a nuclear reactor fuel element comprising parallel rods, more particularly rods containing nuclear fuel, in which an uncoiled jacket of a sleeve (12) is punched out of sheet metal and is formed with slots (19) for webs (13) and with beads (20) and with parallel cuts (15, 16) for forming strips, the punched-out jacket (18) is formed into a prismatic sleeve (12) and the abutting sides (21a, 21b) of the shaped sleeve jacket are welded or soldered, webs and strips are bent out and a number of sleeves (12, 12a, 12b) are arranged in lines to form a spacer (11) so that the respective free ends (13a) of webs (13) abut one another and form wall parts of additional sleeves, and the respective free ends (13a) of the webs are connected by welding or soldering and a spacer grid is formed with meshes, each for holding one rod (2).

## Revendications

1. Assemblage combustible de réacteur nucléaire comprenant des crayons parallèles, notamment des crayons contenant du combustible nucléaire, et au moins une entretoise qui, par mise à la suite les unes des autres de douilles (12, 12a, 12b) prismatiques, forme une grille dont chaque maille reçoit un crayon (2), des barrettes (13) issues des douilles (12, 12a, 12b) étant coudées de manière que, lors de la mise les unes derrière les autres des douilles, les extrémités (13a) libres des barrettes (13) viennent bout-à-bout et forment des parties de paroi de douille (12c) supplémentaires, les points d'aboutement (14) étant reliés par soudure ou par brasure.

2. Assemblage combustible de réacteur nucléaire suivant la revendication 1, dans lequel les douilles (12, 12a, 12b) ont la forme d'un prisme hexagonal et les barrettes (13) sont coudées aux sommets (13b) des douilles (13).

3. Assemblage combustible de réacteur nucléaire suivant la revendication 2, dans lequel les barrettes (13) sont biseautées à leur extrémité (13a) libre.

4. Assemblage combustible de réacteur nucléaire suivant la revendication 1, dans lequel il est prévu, sur au moins une partie de paroi (13c) d'une douille (12), deux entailles (15, 16) parallèles et les lamelles ainsi formées sont coudées pour former un ressort (17) de montage sans jeu d'un crayon (2) guidé dans la douille.

5. Assemblage combustible de réacteur nucléaire suivant la revendication 1 ou 4, dans lequel il est prévu, sur au moins deux parties de paroi de la douille, respectivement au moins une moulure (20) servant de point d'appui au crayon (2).

6. Procédé de fabrication d'une entretoise (1) pour un assemblage combustible de réacteur nucléaire ayant des crayons parallèles, notamment des crayons contenant du combustible nucléaire, qui consiste à découper dans de la tôle une surface latérale développée d'une douille (12) qui est munie de fentes (19) pour des barrettes (13) et d'entailles (15, 16) parallèles pour former des lamelles ainsi que de moulures (20), à mettre la surface latérale (18) découpée sous la forme d'une douille (12) prismatique et à souder ou à braser les côtés (21a, 21b) jointifs de la surface latérale de la douille qui est formée, à couder des barrettes et des lamelles et à mettre un certain nombre de douilles (12, 12a, 12b) les unes derrière les autres sous la forme d'une entretoise (11) de manière que chaque extrémité (13a) libre de barrette (13) vienne bout-à-bout avec une autre extrémité (13a) libre et de manière à former des parties de paroi de douille supplémentaires, les extrémités (13a) libres des barrettes étant reliées par soudage ou par brasage et une grille d'entretoisement étant formée dont chaque maille est destinée à recevoir un crayon (2).
